# EUROPEAN PATENT SPECIFICATION

(11) **EP 2 982 908 B1**
(45) Date of publication and mention of the grant of the patent: **08.11.2017**
(21) Application number: 15179751.1
(22) Date of filing: 04.08.2015
(51) Int. Cl.: F24C 7/08, A21C 13/00

(54) **ELECTRIC OVEN**
ELEKTRISCHER OFEN
FOUR ELECTRIQUE

(30) Priority: 04.08.2014 GB 201413784
(43) Date of publication of application: 10.02.2016
(73) Proprietor: Aga Rangemaster Limited, Leamington Spa Warwickshire CV31 3RG (GB)
(72) Inventor: Bradshaw, Derek, Whitnash, Leamington Spa CV31 2LU (GB)
(74) Representative: Tranter, Andrew David

(56) References cited:
- WO-A2-2012/089741
- FR-A1- 2 260 917
- JP-A- S6 277 524
- JP-A- 2008 180 402
- US-B1- 6 465 762

## Description

The present invention relates to an electric oven.

Known in the art are electric ovens which are controlled via electromechanical thermostats. Known oven types include zoned ovens, fan assisted ovens, fanned ovens and multifunction ovens.

Zoned ovens comprise a heating element which is located either inside or outside, but in thermal contact with a cavity in which food is cooked. When the heating element is located inside the cavity, it can be located in a variety of positions, i.e. top, bottom or sides.

A fan assisted oven is similar to a zoned oven but for the fact that it also comprises a stirring fan which keeps the heat distribution more even within a cavity in the oven. Often the fan is found behind a baffle plate.

A fanned oven is similar to a fan assisted oven, however it includes a heating element positioned around the fan.

Finally multifunction ovens are ovens which allow the user to select between various heating modes. This may include switching between a zoned oven, a fan assisted oven or a fanned oven but may also allow switching between individual heating elements including additional grill elements.

When a user wishes to use an oven for the purposes of baking they must first prove the dough, proving being a stage in baking wherein the dough is allowed to rise. This process occurs between the temperatures of 20°C to 40°C. This temperature range ensures that the bread is proved. Documents US6465762, JP2008180402 and JPS6277524 disclose state of the art ovens relevant for the invention.

The present invention relates to an electric oven comprising a heating circuit, a first temperature control circuit that controls the output of the heating circuit in a cavity of the oven, a second temperature control circuit that controls the output of the heating circuit in the same cavity of the oven and a selection means which selects which of the temperature controls has control of the heating circuit; wherein the first control circuit operates at a first, high temperature, range and the second control circuit operates at a second, low temperature or at a second, low temperature, range suitable for proving dough.

It has now been found that known electric ovens are not suited to proving dough. They use thermostats to control the temperature of the oven that are only operational over too high a temperature range, such as 80°C to 250°C. An electric oven suitable for cooking at normal temperatures is therefore not suitable for proving dough before baking.

In one embodiment, the first control circuit operable to control the heating element over a first temperature range of between 80°C between 250°C and the second temperature control circuit is operational at a second range suitable for proving dough between 20°C between 40°C.

In one embodiment, when the second temperature control circuit is activated, the output of the heating circuit tends towards a single fixed cavity temperature to an accuracy of ±2°C, preferably ±1°C.

The heating circuit may comprise one or more heating elements or may comprise just one heating element. Each heating element may comprise a resistive heating element. Where it comprises more than one element, a respective element may be associated with each control circuit. The heating circuit may comprise one or more fans, preferably one fan. The first temperature control circuit comprises a thermostat.

The second control circuit also comprises a thermostat.

In one embodiment, the oven is a range-style oven.

The oven may be suited to proving dough.

The selection means may comprise a button or rotary knob, which allows the user to control the oven.

The control circuits may be located behind the control panel of the oven. Each control circuit may comprise one or more thermostats. One or more thermostats may be positioned directly into a dial, knob or switch which controls the temperature.

The control circuits may be combined in a single control circuit board.

There will now be described, by way of example only, embodiments within the scope of the present invention as described with reference to the accompanying drawings of which:
**Figure 1** displays an oven according to an embodiment of the present invention.
**Figure 2** displays a schematic of the wiring of a portion of the heating circuit and the control circuit according to an embodiment of the present invention within a multifunction oven.
**Figure 3** displays a schematic of the wiring of a portion of the heating circuit and the control circuit according to an embodiment of the present invention within a zoned oven.

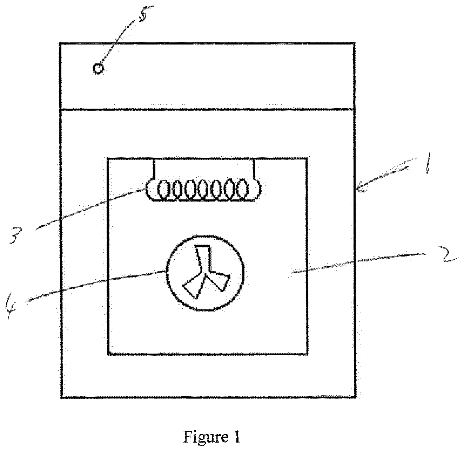

Figure 1 displays an electric oven 1 according to an embodiment of the present invention. The oven 1 comprises a cavity 2, in which food may be cooked or dough may be proved. In this embodiment the oven 1 comprises a heating circuit that comprises a single resistive heating element 3 and a fan 4 within the cavity 2. In other embodiments the heating elements 3 may be outside of, but in thermal contact with, the cavity 2. In some embodiments there may be more than one heating element 3. Where there is more than one element 3, the elements may all be within the cavity 2 or outside of but in thermal contact with the cavity 2. Alternatively one or more elements 3 may be inside and one or more elements 3 may be outside the cavity 2.

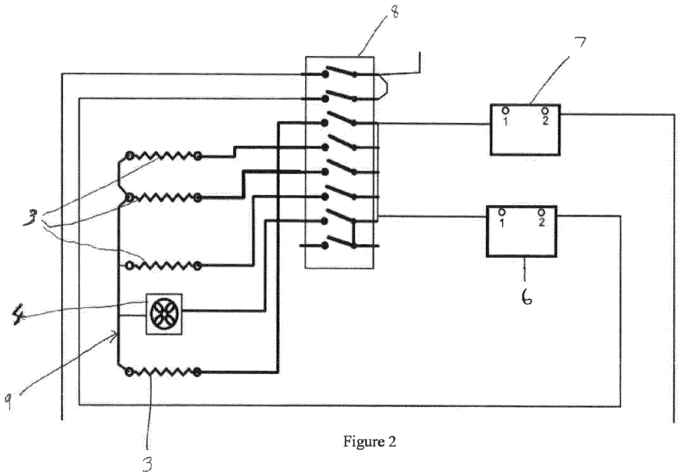

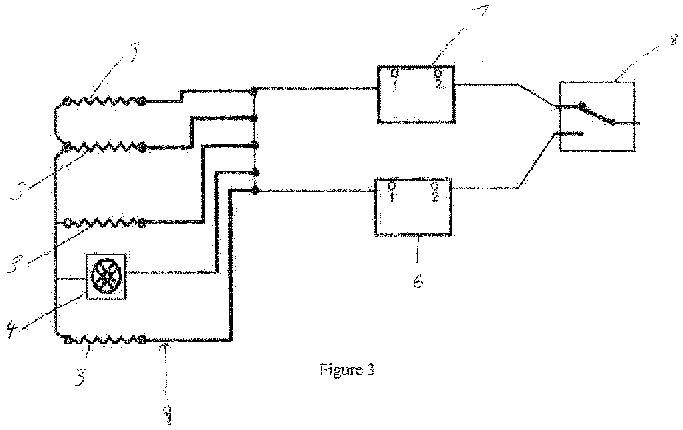

The oven 1 also includes a first temperature control circuit 6 and a second temperature control circuit 7. The temperature control circuits 6, 7 each comprise a thermostat. A selection means 8, such as a switch (as in Figure 2) or plurality of switches (as in Figure 3), is present in the wiring of the oven and the user may use this to switch between the temperature control circuits 6, 7 by pressing a button 5 which alters the arrangement of the selection means 8. In other embodiments, this button 5 may be a dial, knob or switch which can cause the selection means 8 to switch between temperature control units 6, 7. The door of the oven 1 has not been shown for convenience. It is appreciated that standard features of an electric oven are present in this embodiment, such as power supply, power button and temperature dials etc.

Figure 2 displays a schematic of the wiring within a multifunction oven according to an embodiment of the oven of Figure 1.

The schematic displays a portion of the heating circuit 9 which comprises heating elements 3 and a fan 4 in this instance. The heat output of the heating elements 3 is controlled by a high temperature control circuit 6 for standard cooking and by a low temperature control circuit 7 which is suitable for proving dough. A user may press a button 5 on the oven 1 which controls the selection means 8. In this embodiment the selection means 8 comprises a series of switches which control which temperature control circuit 6, 7 is in operation. Other controls operable by the user may control other aspects of the oven 1, such as whether grill elements are activated etc. Operation of the controls will lead to alternative arrangements of the switches of the multifunction selection means 8. Both control circuits 6, 7 comprise at least one thermostat (not shown). Figure 2 displays a partial wiring schematic rather than a full closed circuit however it will be appreciated that this schematic can be used to form a closed circuit.

Figure 3 displays a schematic of the wiring of a zoned oven according to an embodiment of the oven of Figure 1, however the same schematic is also applicable in the case of a fan assisted or fanned oven.

The schematic displays a portion of the heating circuit 9 which comprises heating elements 3 and a fan 4 in this instance. The heat output of the heating elements 3 is controlled by a high temperature control circuit 6 for standard cooking and by a low temperature control circuit 7 which is suitable for proving dough. Both the high and low temperature control circuits 6, 7 comprise at least one thermostat (not shown). In this embodiment, the control circuits 6,7 comprise just one thermostat each. The figure also displays a selection means 8. In this embodiment the selection means 8 is a two-way switch. The two-way switch 8 controls whether the high temperature control circuit 6 or the low temperature control circuit 7 controls the heating circuit 9. This switch 8 is controlled by the user pressing a button 5 on the oven, as shown in Figure 1, however other mechanisms may apply, such as switching a dial, flipping a switch or a rotary knob. Figure 3 displays a partial wiring schematic rather than a full closed circuit, however it will be appreciated that this schematic can be used to form a closed circuit.

## Claims

1. An electric oven (1) comprising;
a heating circuit (9);
a first temperature control circuit (6) that controls the output of the heating circuit (9) in a cavity (2) of the oven (1);
a second temperature control circuit (7) that controls the output of the heating circuit (9) in the same cavity (2) of the oven (1); and
a selection means (8) which selects which of the temperature control circuits (6, 7) has control of the heating circuit (9); **characterised in that**
the first temperature control circuit (6) comprises a first thermostat and operates at a first, high temperature, range; and
the second temperature control circuit (7) comprises a second thermostat operates at a second, low, temperature or at a second, low temperature, range suitable for proving dough.

2. The oven of claim 1, wherein the first temperature control circuit (6) is operable to control a heating element of the heating circuit (9) over a first temperature range of between substantially 80°C and substantially 250°C.

3. The oven of any of claims 1 or 2, the second temperature control circuit (7) is operable to control the heating element of the heating circuit (9) over a second temperature range of between substantially 20°C and substantially 40°C.

4. The oven of any preceding claim, wherein when the second temperature control circuit (7) is activated by the selection means (8), the output of the heating circuit (9) tends towards a single fixed cavity temperature to an accuracy of ±2°C.

5. The oven of any preceding claim, wherein when the second temperature control circuit (7) is activated, the output of the heating circuit (9) tends towards a single fixed cavity temperature to an accuracy of ±1°C.

6. The oven of any preceding claims, wherein the heating circuit (9) comprises one or more heating elements (3).

7. The oven of claim 6, wherein when the heating circuit (9) comprises more than one heating element (3), a respective heating element (3) may be associated with each of the first and second temperature control circuits (6, 7).

8. The oven of any preceding claim, wherein the heating circuit (9) comprises one heating element (3).

9. The oven of any preceding claim, wherein the heating circuit (9) comprises one or more fans (4).

10. The oven of any preceding claim, wherein the oven (1) is a range-style oven.

11. The oven of any preceding claim, wherein the oven (1) is suitable for proving dough.

12. The oven of any preceding claim, wherein the selection means (8) comprises a user-operable button (5) or rotary knob which controls the oven (1).

13. The oven of any preceding claim, wherein the first and second temperature control circuits (6, 7) may be combined in a single control circuit board.

## Patentansprüche

1. Elektroofen (1) umfassend:
einen Heizkreis (9);
einen ersten Temperatursteuerkreis (6), der die Leistung des Heizkreises (9) in einem Hohlraum (2) des Ofens (1) steuert;
einen zweiten Temperatursteuerkreis (7), der die Leistung des Heizkreises (9) im gleichen Hohlraum (2) des Ofens (1) steuert; und
ein Auswahlmittel (8), das auswählt, welcher der Temperatursteuerkreise (6, 7) die Steuerung des Heizkreises (9) durchführt; **dadurch gekennzeichnet, dass**
der erste Temperatursteuerkreis (6) ein erstes Thermostat umfasst und in einem ersten Hochtemperaturbereich arbeitet; und
der zweite Temperatursteuerkreis (7) ein zweites Thermostat umfasst und in einem zweiten Niedertemperaturbereich, geeignet zum Gehenlassen von Teig, arbeitet.

2. Ofen nach Anspruch 1, wobei der erste Temperatursteuerkreis (6) zum Steuern eines Heizelements des Heizkreises (9) über einen ersten Temperaturbereich zwischen im Wesentlichen 80 °C und im Wesentlichen 250 °C ausgebildet ist.

3. Ofen nach einem der Ansprüche 1 oder 2, wobei der zweite Temperatursteuerkreis (7) zum Steuern des Heizelements des Heizkreises (9) über einen zweiten Temperaturbereich zwischen im Wesentlichen 20 °C und im Wesentlichen 40 °C ausgebildet ist.

4. Ofen nach einem der vorhergehenden Ansprüche, wobei, wenn der zweite Temperatursteuerkreis (7) vom Auswahlmittel (8) aktiviert wird, die Leistung des Heizkreises (9) zu einer einzelnen festen Hohlraumtemperatur mit einer Genauigkeit von ±2 °C tendiert.

5. Ofen nach einem der vorhergehenden Ansprüche, wobei, wenn der zweite Temperatursteuerkreis (7) aktiviert wird, die Leistung des Heizkreises (9) zu einer einzelnen festen Hohlraumtemperatur mit einer Genauigkeit von ±1 °C tendiert.

6. Ofen nach einem der vorhergehenden Ansprüche, wobei der Heizkreis (9) eines oder mehrere Heizelemente (3) umfasst.

7. Ofen nach Anspruch 6, wobei, wenn der Heizkreis (9) mehr als ein Heizelement (3) umfasst, ein entsprechendes Heizelement (3) mit jedem von dem ersten und zweiten Temperatursteuerkreis (6, 7) verbunden werden kann.

8. Ofen nach einem der vorhergehenden Ansprüche, wobei der Heizkreis (9) ein Heizelement (3) umfasst.

9. Ofen nach einem der vorhergehenden Ansprüche, wobei der Heizkreis (9) ein oder mehrere Gebläse (4) umfasst.

10. Ofen nach einem der vorhergehenden Ansprüche, wobei der Ofen (1) ein Küchenherd ist.

11. Ofen nach einem der vorhergehenden Ansprüche, wobei der Ofen (1) zum Gehenlassen von Teig ausgebildet ist.

12. Ofen nach einem der vorhergehenden Ansprüche, wobei das Auswahlmittel (8) eine vom Bediener zu betätigende Taste (5) oder einen Drehknopf zum Steuern des Ofens (1) umfasst.

13. Ofen nach einem der vorhergehenden Ansprüche, wobei der erste und zweite Temperatursteuerkreis (6, 7) in einer einzigen Steuerleiterplatte kombiniert sein können.

## Revendications

1. Four électrique (1), comprenant :
un circuit chauffant (9) ;
un premier circuit de régulation de température (6) qui régule la sortie du circuit chauffant (9) dans une cavité (2) du four (1) ;
un deuxième circuit de régulation de température (7) qui régule la sortie du circuit chauffant (9) dans la même cavité (2) du four (1) ; et
un moyen de sélection (8) qui sélectionne lequel des circuits de régulation de température (6, 7) est en train de réguler le circuit chauffant (9) ; **caractérisé en ce que**
le premier circuit de régulation de température (6) comprend un premier thermostat et fonctionne dans une première plage correspondant à des températures élevées ; et
le deuxième circuit de régulation de température (7) comprend un deuxième thermostat et fonctionne dans une deuxième plage correspondant à des températures basses, ou dans une deuxième plage correspondant à des températures basses convenant à la fermentation de la pâte.

2. Four selon la revendication 1, dans lequel le premier circuit de régulation de température (6) est capable de réguler un élément chauffant du circuit chauffant (9) sur une première plage de températures comprise entre environ 80 °C et environ 250 °C.

3. Four selon l'une quelconque des revendications 1 et 2, le deuxième circuit de régulation de température (7) étant capable de réguler l'élément chauffant du circuit chauffant (9) sur une deuxième plage de températures comprise entre environ 20 °C et environ 40 °C.

4. Four selon l'une quelconque des revendications précédentes, dans lequel, lorsque le deuxième circuit de régulation de température (7) est activé par le moyen de sélection (8), la sortie du circuit chauffant (9) tend vers une température de cavité fixe unique avec une précision de ± 2 °C.

5. Four selon l'une quelconque des revendications précédentes, dans lequel, lorsque le deuxième circuit de régulation de température (7) est activé, la sortie du circuit chauffant (9) tend vers une température de cavité fixe unique avec une précision de ± 1 °C.

6. Four selon l'une quelconque des revendications précédentes, dans lequel le circuit chauffant (9) comprend un ou plusieurs éléments chauffants (3).

7. Four selon la revendication 6, dans lequel, lorsque le circuit chauffant (9) comprend plus d'un élément chauffant (3), un élément chauffant (3) respectif peut être associé à chacun des premier et deuxième circuits de régulation de température (6, 7).

8. Four selon l'une quelconque des revendications précédentes, dans lequel le circuit chauffant (9) comprend un élément chauffant (3).

9. Four selon l'une quelconque des revendications précédentes, dans lequel le circuit chauffant (9) comprend un ou plusieurs ventilateurs (4).

10. Four selon l'une quelconque des revendications précédentes, le four (1) étant dans le style d'une cuisinière.

11. Four selon l'une quelconque des revendications précédentes, le four (1) convenant à la fermentation de la pâte.

12. Four selon l'une quelconque des revendications précédentes, dans lequel le moyen de sélection (8) comprend un bouton (5) ou une molette rotative, pouvant être manoeuvrés par l'utilisateur, qui commandent le four (1).

13. Four selon l'une quelconque des revendications précédentes, dans lequel les premier et deuxième circuits de régulation de température (6, 7) peuvent être combinés en une même carte de circuit de commande.
